(19) Europäisches Patentamt
European Patent Office
Office européen des brevets

(11) **EP 3 520 211 B1**

(12) **FASCICULE DE BREVET EUROPEEN**

(45) Date de publication et mention
de la délivrance du brevet:
**30.03.2022 Bulletin 2022/13**

(21) Numéro de dépôt: **17787496.3**

(22) Date de dépôt: **28.09.2017**

(51) Classification Internationale des Brevets (IPC):
**H02M 1/42** *(2007.01)* **B60L 50/60** *(2019.01)*
**H02M 1/00** *(2006.01)*

(52) Classification Coopérative des Brevets (CPC):
**B60L 50/60; H02M 1/0025; H02M 1/007;**
**H02M 1/4216;** H02M 1/0012; Y02T 10/70;
Y02T 10/7072; Y02T 90/14

(86) Numéro de dépôt international:
**PCT/FR2017/052641**

(87) Numéro de publication internationale:
**WO 2018/060632 (05.04.2018 Gazette 2018/14)**

(54) **PROCEDE DE DETERMINATION DE CONSIGNE DE COURANT POUR CHARGEUR DE BATTERIE DE VEHICULE AUTOMOBILE**

VERFAHREN ZUR BESTIMMUNG EINES STROMSOLLWERTS FÜR EIN KRAFTFAHRZEUGBATTERIELADEGERÄT

METHOD FOR DETERMINING A CURRENT SETPOINT FOR A MOTOR VEHICLE BATTERY CHARGER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.09.2016 FR 1659325**

(43) Date de publication de la demande:
**07.08.2019 Bulletin 2019/32**

(73) Titulaires:
• **Renault s.a.s**
**92100 Boulogne Billancourt (FR)**
• **Nissan Motor Co., Ltd.**
**Yokohama-shi, Kanagawa 221-0023 (JP)**

(72) Inventeurs:
• **KOTEICH, Mohamad**
**91440 Bures Sur Yvette (FR)**
• **MALOUM, Abdelmalek**
**94550 Chevilly La Rue (FR)**

• **NEGRE, Edouard**
**78180 Montigny Le Bretonneux (FR)**

(74) Mandataire: **Renault Group**
**Renault s.a.s.**
**API : TCR GRA 2 36**
**1, Avenue du Golf**
**78084 Guyancourt Cedex (FR)**

(56) Documents cités:
**FR-A1- 3 006 521      FR-A1- 3 026 244**
**US-A1- 2007 067 069**

• **MING ZHANG ET AL: "A Novel Strategy for Three-Phase/Switch/Level (Vienna) Rectifier Under Severe Unbalanced Grids", IEEE TRANSACTIONS ON INDUSTRIAL ELECTRONICS, IEEE SERVICE CENTER, PISCATAWAY, NJ, USA, vol. 60, no. 10, 1 October 2013 (2013-10-01), pages 4243-4252, XP011510491, ISSN: 0278-0046, DOI: 10.1109/TIE.2012.2217721**

**EP 3 520 211 B1**

**Description**

La présente invention se rapporte, de manière générale, aux véhicules électriques et hybrides, et se rapporte plus précisément aux dispositifs de charge des batteries de véhicules électriques et de véhicules hybrides rechargeables.

L'invention se réfère, plus précisément, à un procédé qui permet de décliner une consigne de puissance active instantanée en des consignes de courant à partir de mesures de tension issues d'un redresseur raccordé, directement, ou par l'intermédiaire d'un adaptateur d'impédance, à un réseau électrique, ainsi qu'à un chargeur de batterie de véhicule électrique ou hybride configuré pour mettre en œuvre un tel procédé.

De manière non-limitative, la solution proposée est générale pour tous les redresseurs.

Les réseaux électriques auxquels sont reliés les chargeurs sont généralement triphasés. Ils alimentent des récepteurs triphasés tels que les chargeurs de véhicules, mais aussi beaucoup d'autres récepteurs monophasés. Les courants absorbés sur les trois phases sont donc d'amplitude sensiblement différente et accusent, localement, des variations quasi-instantanées d'amplitude et de phases qui sont à l'origine de déséquilibres de tension.

Ces problèmes de déséquilibres sont connus, notamment par le document CN 103187887 B, qui décrit un contrôleur pour redresseur Vienna utilisant une consigne sinusoïdale, mais n'illustre aucune solution à ces problèmes.

Le document US 8971068 B2 décrit un moyen de supprimer les différents harmoniques, issus d'un redresseur unidirectionnel triphasé à haute tension, pour respecter ou s'approcher d'un seuil prédéterminé de la valeur absolue de la différence de phase entre la tension d'entrée du courant alternatif et du courant issu du redresseur unidirectionnel.

Toutefois, ce document US 8971068 B2 ne décrit pas de possibilité de fournir une consigne particulière de puissance active instantanée.

De manière analogue, d'autres documents, tels que CN 104811061 A, CN 103227575 A, et KR 101250454 B1 décrivent des redresseurs à compensation de puissance réactive, sans néanmoins divulguer des consignes de courant.

Le document EP 2 461 469 A3 propose un système capable de générer les consignes de courant continu dans un repère tournant. Toutefois, il présente l'inconvénient de recourir à une grandeur supplémentaire, comme la phase du repère tournant, pour commander un redresseur pour générer les signaux de sortie.

Le document FR3006521 divulgue un système de transfert de charge comprenant un étage de correction du facteur de puissance relié en entrée à un réseau d'alimentation électrique, un étage de conversion continu-continu relié en sortie à une batterie, les deux étages étant reliés entre eux par une capacité de redressement, et un système de commande apte à réguler la tension aux bornes de la capacité de redressement de sorte qu'elle soit constante.

Le document suivant divulgue un redresseur de Vienne triphasé avec une correction de la consigne du courant en entrée du redresseur afin de pallier le déséquilibre des tensions de réseau:
M. Zhang, L. Hang, W. Yao, Z. Lu and L. M. Tolbert, "A Novel Strategy for Three-Phase/Switch/ Level (Vienna) Rectifier Under Severe Unbalanced Grids," in IEEE Transactions on Industrial Electronics, vol. 60, no. 10, pp. 4243-4252, Oct. 2013, doi: 10.1109/TIE.2012.2217721.

Le problème que se propose de résoudre la présente invention consiste à générer des consignes de courants filtrées pour alimenter un chargeur de batterie de véhicule à partir d'une consigne de puissance active et de tensions d'un réseau électrique triphasé et ce, de manière suffisamment fiable pour pallier les déséquilibres du réseau électrique.

L'invention porte donc sur un procédé de détermination d'au moins une consigne de courant en entrée d'un redresseur à compensation de puissance réactive selon la revendication 1.

L'invention porte également sur un chargeur de batterie de véhicule électrique ou hybride selon la revendication 4. Les revendications dépendantes récitent des modes de réalisation avantageux de l'invention.

D'autres buts, avantages et caractéristiques de l'invention apparaîtront à la lecture de la description détaillée d'un mode de réalisation de l'invention, non limitatif, illustré sur les dessins annexés, dans lesquels :

- la figure 1 représente schématiquement la structure d'un chargeur de batterie de véhicule électrique ou hybride ; et
- la figure 2 représente les différentes étapes du procédé de détermination d'au moins une consigne de courant selon l'invention.

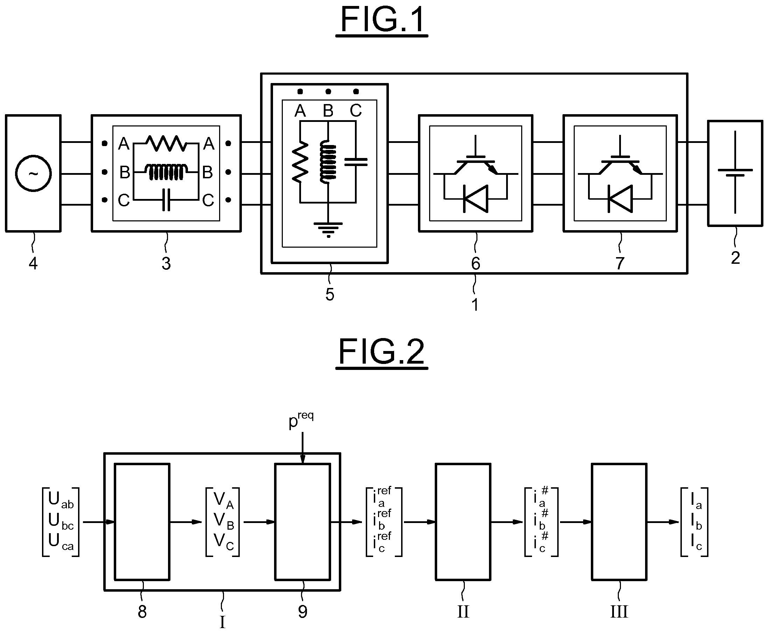

Sur la figure 1, on a représenté un chargeur 1 d'une batterie 2 de véhicule électrique ou hybride, relié par l'intermédiaire d'un adaptateur d'impédance 3 à un réseau électrique 4 triphasé. Le chargeur 1 de batterie 2 comprend un filtre 5 d'entrée, relié en entrée aux trois tensions de sortie de l'adaptateur d'impédance 3, et en sortie à un redresseur 6 à compensation de puissance réactive (Power Factor Correction - PFC). Le chargeur 1 de batterie 2 comprend en outre un convertisseur de tension continu-continu 7 relié en entrée au redresseur 6, et en sortie à une batterie 2.

De manière non limitative, la batterie 2 est ici adaptée pour délivrer une tension de 400V. Elle est alimentée par la tension de deux capacités en sortie du redresseur 6, asservies de façon indépendante par le convertisseur de tension continu-continu 7.

Bien entendu, on ne sort pas de l'invention lorsqu'il s'agit de charger une batterie ayant une capacité différente.

Le chargeur est associé à un calculateur (non représenté) par exemple intégré au chargeur ou distinct du chargeur, adapté pour piloter la commutation des éléments de commutation du redresseur 6 et du convertisseur 7.

Le calculateur est en outre dûment programmé pour générer des consignes de courant en entrée du redresseur 6 à partir de mesures de tensions composées pour assurer une consigne de puissance active.

Sur la figure 2, on a représenté les différentes étapes du procédé de détermination de trois consignes de courant $I_a^*, I_b^*, I_c^*$ en entrée du redresseur 6. Ce procédé comprenant une première étape I de calcul des consignes de courant, une deuxième étape II de filtrage adaptatif, et une troisième étape III de limitation du taux de variation des consignes de courant.

La première étape I comporte une première phase 8 de calcul de tensions simples et une seconde phase 9 de calcul de consignes de courant non filtrées.

Dans un mode de réalisation de l'invention, on définit les tensions triphasées simples suivantes : $U_a, U_b, U_c$ définies par rapport à un point de tension neutre N. On mesure les tensions composées en entrée du redresseur 6 $U_{ab}, U_{bc}, U_{ca}$ au moyen de la relation suivante :

$$\begin{cases} U_{ab} = U_a - U_b \\ U_{bc} = U_b - U_c \\ U_{ca} = U_c - U_a \end{cases} \qquad (1)$$

Ce système linéaire peut être mis sous la forme : $U = AV$

Où

$$U = \begin{bmatrix} U_{ab} \\ U_{bc} \\ U_{ca} \end{bmatrix}, \ V = \begin{bmatrix} U_a \\ U_b \\ U_c \end{bmatrix} \text{ et } A = \begin{bmatrix} 1 & -1 & 0 \\ 0 & 1 & -1 \\ -1 & 0 & 1 \end{bmatrix}$$

Il n'est pas inversible car le déterminant de $A$ est nul.

On pourrait introduire un capteur de tension au point de tension neutre pour s'affranchir des tensions composées.

D'après la théorie des composantes symétriques de Fortescue, il est cependant possible de réécrire ce système « déséquilibré » en un système « équilibré », comprenant respectivement une composante directe $U_d$, une composante inverse $U_i$, et une composante homopolaire $U_0$ des tensions composées comme suit :

$$\begin{cases} U_d = \dfrac{1}{3}\left(U_{ab} + aU_{bc} + a^2 U_{ca}\right) \\ U_i = \dfrac{1}{3}\left(U_{ab} + a^2 U_{bc} + aU_{ca}\right) \\ U_0 = 0 \end{cases} \qquad (2)$$

Avec

$$a = \frac{-1 + i\sqrt{2}}{2}$$

La dernière composante homopolaire $U_0$ du système d'équation (2) est négligée dans le cas où on ne génère pas de puissance active homopolaire.

Cette réécriture permet de déduire mathématiquement les composantes directe $V_d$ et inverse $V_i$ de la tension simple comme suit :

$$\begin{cases} V_d = \dfrac{1}{1-a^2}U_d = \dfrac{1}{\sqrt{3}}e^{-i\frac{\Pi}{6}}U_d \\[3mm] V_i = \dfrac{1}{1-a^2}U_i = \dfrac{1}{\sqrt{3}}e^{i\frac{\Pi}{6}}U_i \end{cases} \tag{3}$$

On accède ainsi au système triphasé des tensions simples $v_1, v_2, v_3$ au moyen des relations :

$$\begin{cases} v_1 = V_d + V_i \\ v_2 = a^2 V_d + a V_i \\ v_3 = a V_d + a^2 V_i \end{cases} \tag{4}$$

On peut utiliser cette théorie pour aboutir au calcul, lors d'une première phase 8 de la première étape I, des tensions triphasées simples $U_a, U_b, U_c$ à partir de $U_{ab}, U_{ca}, U_{bc}$ correspondant aux tensions différentielles entres phases mesurées en entrée du redresseur 6.

Une seconde phase 9 de la première étape I comprend le calcul des consignes de courant $I_a^{req}, I_b^{req}, I_c^{req}$ qui assurent une consigne de puissance active instantanée. On peut calculer ces consignes de courant dans un repère diphasé pour réduire l'ordre du système de 3 à 2.

Deux nouvelles tensions $v_\alpha, v_\beta$ peuvent être introduites pour réduire l'ordre du système :

$$\begin{bmatrix} v_\alpha \\ v_\beta \end{bmatrix} = \sqrt{\frac{2}{3}} \begin{bmatrix} 1 & -\dfrac{1}{2} & -\dfrac{1}{2} \\[3mm] 0 & \dfrac{\sqrt{3}}{2} & -\dfrac{\sqrt{3}}{2} \end{bmatrix} \begin{bmatrix} v_1 \\ v_2 \\ v_3 \end{bmatrix}, \tag{5}$$

Ainsi qu'une nouvelle équation de la puissance active et réactive instantanée :

$$p + jq = (v_\alpha - jv_\beta)(i_\alpha + ji_\beta) \tag{6}$$

Où

$j$ est l'opérateur imaginaire pur tel que $j^2 = -1$ ;
$p$ est la puissance active instantanée ;
$q$ représente les pertes sous forme de puissance réactive ; et
$i_\alpha$ et $i_\beta$ représentent deux grandeurs d'intensité associées à la puissance $p$, et aux tensions $v_\alpha$ et $v_\beta$.

En séparant les parties imaginaire et réelles, l'équation (6) de la puissance active et réactive instantanée devient :

$$\begin{cases} p(t) = v_\alpha i_\alpha + v_\beta i_\beta \\ v_\alpha i_\beta - v_\beta i_\alpha = q(t) \end{cases} \tag{7}$$

On résout, en particulier, le système pour $p = P^{req}$ et $q = 0$. On obtient alors :

$$\begin{bmatrix} i_\alpha \\ i_\beta \end{bmatrix} = \frac{P^{req}}{v_\alpha^2 + v_\beta^2} \begin{bmatrix} v_\alpha \\ v_\beta \end{bmatrix} \tag{8}$$

D'une part, les consignes de courant à appliquer $I_a^{req}$, $I_b^{req}$, $I_c^{req}$ se calculent comme suit :

$$\begin{bmatrix} I_a^{req} \\ I_b^{req} \\ I_c^{req} \end{bmatrix} = \sqrt{\frac{2}{3}} \begin{bmatrix} 1 & 0 \\ -\frac{1}{2} & \frac{\sqrt{3}}{2} \\ -\frac{1}{2} & -\frac{\sqrt{3}}{2} \end{bmatrix} \begin{bmatrix} i_\alpha \\ i_\beta \end{bmatrix} \tag{9}$$

D'autre part,

$$v_\alpha^2 + v_\beta^2 = v_1^2 + v_2^2 + v_3^2 = \frac{3}{2}\left(U_{ab}^2 + U_{bc}^2 + U_{ca}^2\right)$$

Les consignes de courant obtenues à l'issue de la seconde phase 9 peuvent être calculées à partir de la relation suivante :

$$\begin{bmatrix} I_a^{req} \\ I_b^{req} \\ I_c^{req} \end{bmatrix} = \frac{P^{req}}{U_{ab}^2 + U_{bc}^2 + U_{ca}^2} \begin{bmatrix} U_{ab} - U_{ca} \\ U_{bc} - U_{ab} \\ U_{ca} - U_{bc} \end{bmatrix} \tag{10}$$

Où

$P^{req}$ est la consigne de puissance active instantanée fournie par une unité de contrôle de la charge de la batterie de traction et correspond à une consigne de puissance de charge de la batterie ; et

$I_a^{req}$, $I_b^{req}$, $I_c^{req}$ sont les consignes de courant non filtrées, $U_{ab}, U_{bc}, U_{ca}$ sont les mesures de tension en entrée du redresseur 6.

On met alors en œuvre la deuxième étape II de filtrage au moyen d'un filtre passe-bas d'ordre 1 selon la formule :

$$F_{lp}(s) = \frac{2\Pi f_{lp}}{s + 2\Pi f_{lp}} \tag{11}$$

Où :
$f_{lp}$ est la fréquence de coupure du filtre passe-bas d'ordre 1 ; et s est l'opérateur de différentiation de Laplace.

On obtient alors les consignes de courant filtrées $I_a^{\#}$, $I_b^{\#}$, $I_c^{\#}$ suivantes :

$$\begin{bmatrix} I_a^{\#} \\ I_b^{\#} \\ I_c^{\#} \end{bmatrix} = \frac{2}{6} \frac{2\pi f_{lp}}{s + 2\pi f_{lp}} \begin{bmatrix} 2 & -\sqrt{3}\frac{f}{f_{lp}} - 1 & \sqrt{3}\frac{f}{f_{lp}} - 1 \\ \sqrt{3}\frac{f}{f_{lp}} - 1 & 2 & -\sqrt{3}\frac{f}{f_{lp}} - 1 \\ -\sqrt{3}\frac{f}{f_{lp}} - 1 & \sqrt{3}\frac{f}{f_{lp}} - 1 & 2 \end{bmatrix} \begin{bmatrix} I_a^{req} \\ I_b^{req} \\ I_c^{req} \end{bmatrix} \tag{12}$$

De manière non limitative, cette étape peut être mise en œuvre au moyen du filtre 5 d'entrée du chargeur 1.

On discrétise chacune des consignes de courant filtrées $I_a^{\#}$, $I_b^{\#}$, $I_c^{\#}$ pour calculer, lors de la troisième étape III, qui peut être répétée de manière itérative, les consignes de courant $I_a^*$, $I_b^*$, $I_c^*$ au moyen de la formule de limitation de la variation des consignes de courant filtrées $I_a^\#$, $I_b^\#$, $I_c^\#$ suivante :

$$x_{k+1} = \max(\min(x_k + \alpha T_S, x_k), x_k - \alpha T_S) \qquad (13)$$

Où

$\alpha$ est le taux de variation maximum ;
$T_s$ est le pas d'échantillonnage ; et
$\{x_k\}_{k \in \mathbb{N}}$ est une consigne de courant filtrée discrétisée.

Cette étape peut être mise en œuvre au moyen du convertisseur de tension continu-continu 7 du chargeur 1, ou d'un calculateur externe.

## Revendications

1. Procédé de détermination d'au moins une consigne de courant $\left(I_a^*, I_b^*, I_c^*\right)$ en entrée d'un redresseur à compensation de puissance réactive à partir d'au moins une mesure de tension ($U_{ab}, U_{bc}, U_{ca}$) en entrée du redresseur (6) et d'au moins une consigne de puissance active instantanée (*Preq*), comprenant une première étape de calcul (I) de ladite au moins une consigne de courant $\left(I_a^*, I_b^*, I_c^*\right)$ ; une deuxième étape (II) de filtrage adaptatif de ladite au moins une consigne de courant, et une troisième étape (III) de limitation du taux de variation de ladite au moins une consigne de courant $\left(I_a^*, I_b^*, I_c^*\right)$, la première étape (I) de calcul comprenant un calcul d'au moins une consigne de courant non filtrée $\left(I_a^{req}, I_b^{req}, I_c^{req}\right)$, selon la formule :

$$\begin{bmatrix} I_a^{req} \\ I_b^{req} \\ I_c^{req} \end{bmatrix} = \frac{P^{req}}{U_{ab}^2 + U_{bc}^2 + U_{ca}^2} \begin{bmatrix} U_{ab} - U_{ca} \\ U_{bc} - U_{ab} \\ U_{ca} - U_{bc} \end{bmatrix}$$

où

$P^{req}$ est la consigne de puissance active instantanée fournie par une unité de contrôle de la charge de la batterie de traction ; $\left(I_a^{req}, I_b^{req}, I_c^{req}\right)$ sont les consignes de courant non filtrées, ($U_{ab}, U_{bc}, U_{ca}$) sont les mesures de tension différentielles entre phases mesurées en entrée du redresseur (6).

2. Procédé selon la revendication 1, dans lequel la deuxième étape (II) de filtrage adaptatif comprend le calcul d'au moins une consigne de courant, en particulier une consigne de courant filtrée $\left(I_a^\#, I_b^\#, I_c^\#\right)$, à partir de ladite au moins une consigne de courant non filtrée $\left(I_a^{req}, I_b^{req}, I_c^{req}\right)$ selon la formule :

$$\begin{bmatrix} I_a^{\#} \\ I_b^{\#} \\ I_c^{\#} \end{bmatrix} = \frac{2}{6} \frac{2\pi f_{lp}}{s + 2\pi f_{lp}} \begin{bmatrix} 2 & -\sqrt{3}\dfrac{f}{f_{lp}}-1 & \sqrt{3}\dfrac{f}{f_{lp}}-1 \\ \sqrt{3}\dfrac{f}{f_{lp}}-1 & 2 & -\sqrt{3}\dfrac{f}{f_{lp}}-1 \\ -\sqrt{3}\dfrac{f}{f_{lp}}-1 & \sqrt{3}\dfrac{f}{f_{lp}}-1 & 2 \end{bmatrix} \begin{bmatrix} I_a^{req} \\ I_b^{req} \\ I_c^{req} \end{bmatrix}$$

Où

$I_a^{\#}, I_b^{\#}, I_c^{\#}$ sont les consignes de courant filtrées ;

$s$ est l'opérateur de Laplace ;

$f$ est la fréquence du réseau électrique (4) ; et

$f_{lp}$ est la fréquence de coupure d'un
filtre passe bas d'ordre 1.

3. Procédé selon la revendication 2, dans lequel la troisième étape (III) de limitation du taux de variation de ladite au moins une consigne de courant comprend le calcul de ladite au moins une consigne de courant $\left(I_a^{*}, I_b^{*}, I_c^{*}\right)$ à partir de ladite au moins une consigne de courant filtrée $\left(I_a^{\#}, I_b^{\#}, I_c^{\#}\right)$ et discrétisée selon la formule :

$$x_{k+1} = \max(\min(x_k + \alpha T_S, x_k), x_k - \alpha T_S)$$

Où

$\alpha$ est le taux de variation maximum ;

$T_S$ est le pas d'échantillonnage ; et

$\{x_k\}_{k \in \mathbb{N}}$ est une consigne de courant filtrée discrétisée.

4. Chargeur de batterie de véhicule électrique ou hybride configuré pour la mise en œuvre d'un procédé de détermination d'au moins une consigne de courant $\left(I_a^{*}, I_b^{*}, I_c^{*}\right)$ à partir d'au moins une mesure de tensions différentielles entre phases ($U_{ab}, U_{bc}, U_{ca}$) mesurées en entrée d'un redresseur et d'au moins une consigne de puissance active instantanée ($P^{req}$) selon l'une quelconque des revendications 1 à 3, comprenant un redresseur (6), un filtre d'entrée (5) relié audit redresseur (6), et un convertisseur de tension continu-continu (7) relié audit redresseur (6) et à au moins une batterie (2).

5. Chargeur de batterie selon la revendication 4, dans lequel le filtre d'entrée (5) est configuré pour mettre en œuvre une étape (II) de filtrage adaptatif de ladite au moins une consigne de courant.

6. Chargeur de batterie selon l'une des revendications 4 et 5, dans lequel ledit redresseur (6) est un redresseur à compensation de puissance réactive, en particulier, un redresseur Vienna comprenant deux capacités en sortie.

7. Chargeur de batterie selon l'une quelconque des revendications 4 à 6, dans lequel le convertisseur de tension continu-continu (7) est adapté pour délivrer une tension de 400V à ladite au moins une batterie (2).

**Patentansprüche**

1. Verfahren zur Bestimmung mindestens eines Stromsollwerts $(I_a^{*}, I_b^{*}, I_c^{*})$ am Eingang eines Gleichrichters mit Blindleistungskompensation auf Basis mindestens einer Spannungsmessung ($U_{ab}, U_{bc}, U_{ca}$) am Eingang des Gleichrichters (6) und mindestens eines Sollwerts für eine momentane Wirkleistung ($P^{req}$), beinhaltend einen ersten Schritt des Berechnens (I) des mindestens einen Stromsollwerts $\left(I_a^*, I_b^*, I_c^*\right)$ ; einen zweiten Schritt (II) der adaptiven Filterung des mindestens einen Stromsollwerts und einen dritten Schritt (III) des Begrenzens der Änderungsrate des mindestens einen Stromsollwerts $\left(I_a^*, I_b^*, I_c^*\right)$ , wobei der erste Schritt (I) des Berechnens ein Berechnen mindestens eines nicht gefilterten Stromsollwerts $\left(I_a^{req}, I_b^{req}, I_c^{req}\right)$ gemäß der folgenden Formel beinhaltet:

$$\begin{bmatrix} I_a^{req} \\ I_b^{req} \\ I_c^{req} \end{bmatrix} = \frac{P^{req}}{U_{ab}^2 + U_{bc}^2 + U_{ca}^2} \begin{bmatrix} U_{ab} - U_{ca} \\ U_{bc} - U_{ab} \\ U_{ca} - U_{bc} \end{bmatrix}$$

wobei

$P^{req}$ der Sollwert für eine momentane Wirkleistung ist, der von einer Einheit zur Steuerung des Ladezustands der Antriebsbatterie bereitgestellt wird;

$\left(I_a^{req}, I_b^{req}, I_c^{req}\right)$ die nicht gefilterten Stromsollwerte sind, $(U_{ab}, U_{bc}, U_{ca})$ die Differenzspannungsmessungen zwischen Phasen sind, die am Eingang des Gleichrichters (6) gemessen werden.

2.  Verfahren nach Anspruch 1, wobei der zweite Schritt (II) der adaptiven Filterung das Berechnen mindestens eines Stromsollwerts, insbesondere eines gefilterten Stromsollwerts $\left(I_a^{\#}, I_b^{\#}, I_c^{\#}\right)$ , auf Basis des mindestens einen nicht gefilterten Stromsollwerts $\left(I_a^{req}, I_b^{req}, I_c^{req}\right)$ gemäß der folgenden Formel beinhaltet:

$$\begin{bmatrix} I_a^{\#} \\ I_b^{\#} \\ I_c^{\#} \end{bmatrix} = \frac{2}{6} \frac{2\pi f_{lp}}{s + 2\pi f_{lp}} \begin{bmatrix} 2 & -\sqrt{3}\dfrac{f}{f_{lp}} - 1 & \sqrt{3}\dfrac{f}{f_{lp}} - 1 \\ \sqrt{3}\dfrac{f}{f_{lp}} - 1 & 2 & -\sqrt{3}\dfrac{f}{f_{lp}} - 1 \\ -\sqrt{3}\dfrac{f}{f_{lp}} - 1 & \sqrt{3}\dfrac{f}{f_{lp}} - 1 & 2 \end{bmatrix} \begin{bmatrix} I_a^{req} \\ I_b^{req} \\ I_c^{req} \end{bmatrix}$$

wobei

$I_a^{\#}, I_b^{\#}, I_c^{\#}$ die gefilterten Stromsollwerte sind;
s der Laplace-Operator ist;
$f$ die Frequenz des elektrischen Netzes (4) ist; und
$f_{lp}$ die Grenzfrequenz eines Tiefpassfilters 1. Ordnung ist.

3.  Verfahren nach Anspruch 2, wobei der dritte Schritt (III) des Begrenzens der Änderungsrate des mindestens einen Stromsollwerts das Berechnen des mindestens einen Stromsollwerts $\left(I_a^*, I_b^*, I_c^*\right)$ auf Basis des mindestens einen gefilterten Stromsollwerts $\left(I_a^{\#}, I_b^{\#}, I_c^{\#}\right)$ beinhaltet, der gemäß der folgenden Formel diskretisiert wird:

$$x_{k+1} = max(min(x_k + \alpha T_s, x_k), x_k - \alpha T_s)$$

wobei

$\alpha$ die maximale Änderungsrate ist;
$T_s$ die Abtastrate ist; und

$\{x_k\}_{k \in N}$ ein diskretisierter gefilterter Stromsollwert ist.

**4.** Batterieladegerät eines Elektro- oder Hybridfahrzeugs, das dazu konfiguriert ist, ein Verfahren zur Bestimmung mindestens eines Stromsollwerts $\left(I_a^*, I_b^*, I_c^*\right)$ auf Basis mindestens einer Messung von Differenzspannungen zwischen Phasen ($U_{ab}$, $U_{bc}$, $U_{ca}$), die am Eingang eines Gleichrichters gemessen werden, und mindestens eines Sollwerts für eine momentane Wirkleistung $P^{req}$ nach einem der Ansprüche 1 bis 3 durchzuführen, beinhaltend einen Gleichrichter (6), ein Eingangsfilter (5), das mit dem Gleichrichter (6) verbunden ist, und einen Gleichstrom-Gleichstrom-Spannungswandler (7), der mit dem Gleichrichter (6) und mindestens einer Batterie (2) verbunden ist.

**5.** Batterieladegerät nach Anspruch 4, wobei das Eingangsfilter (5) dazu konfiguriert ist, einen Schritt (II) der adaptiven Filterung des mindestens einen Stromsollwerts durchzuführen.

**6.** Batterieladegerät nach einem der Ansprüche 4 und 5, wobei der Gleichrichter (6) ein Gleichrichter mit Blindleistungskompensation und insbesondere ein Vienna-Gleichrichter, der zwei Kondensatoren am Ausgang beinhaltet, ist.

**7.** Batterieladegerät nach einem der Ansprüche 4 bis 6, wobei der Gleichstrom-Gleichstrom-Spannungswandler (7) dazu angepasst ist, der mindestens einen Batterie (2) eine Spannung von 400 V zu liefern.

**Claims**

**1.** Method for determining at least one current setpoint $\left(I_a^*, I_b^*, I_c^*\right)$ at input of a rectifier with reactive power compensation from at least one voltage measurement ($U_{ab}, U_{bc}, U_{ca}$) at input of the rectifier (6) and at least one instantaneous active power setpoint ($P^{req}$), comprising a first step (I) of calculating said at least one current setpoint $\left(I_a^*, I_b^*, I_c^*\right)$ ; a second step (II) of adaptive filtering of said at least one current setpoint, and a third step (III) of limiting the degree of variation of said at least one current setpoint $\left(I_a^*, I_b^*, I_c^*\right)$ , the first calculating step (I) comprising a calculation of at least one non-filtered current setpoint $\left(I_a^{req}, I_b^{req}, I_c^{req}\right)$ , according to the formula:

$$\begin{bmatrix} I_a^{req} \\ I_b^{req} \\ I_c^{req} \end{bmatrix} = \frac{P^{req}}{U_{ab}^2 + U_{bc}^2 + U_{ca}^2} \begin{bmatrix} U_{ab} - U_{ca} \\ U_{bc} - U_{ab} \\ U_{ca} - U_{bc} \end{bmatrix}$$

where

$P^{req}$ is the instantaneous active power setpoint provided by a unit for controlling the charging of the drive battery; $\left(I_a^{req}, I_b^{req}, I_c^{req}\right)$ are the non-filtered current setpoints, and ($U_{ab}, U_{bc}, U_{ca}$) are the differential voltage measurements between phases measured at input of the rectifier (6).

**2.** Method according to Claim 1, wherein the second step (II) of adaptive filtering comprises the calculation of at least one current setpoint, in particular a filtered current setpoint $\left(I_a^{\#}, I_b^{\#}, I_c^{\#}\right)$ , from said at least one non-filtered current setpoint $\left(I_a^{req}, I_b^{req}, I_c^{req}\right)$ according to the formula:

$$\begin{bmatrix} I_a^{\#} \\ I_b^{\#} \\ I_c^{\#} \end{bmatrix} = \frac{2}{6} \frac{2\pi f_{lp}}{s + 2\pi f_{lp}} \begin{bmatrix} 2 & -\sqrt{3}\dfrac{f}{f_{lp}} - 1 & \sqrt{3}\dfrac{f}{f_{lp}} - 1 \\ \sqrt{3}\dfrac{f}{f_{lp}} - 1 & 2 & -\sqrt{3}\dfrac{f}{f_{lp}} - 1 \\ -\sqrt{3}\dfrac{f}{f_{lp}} - 1 & \sqrt{3}\dfrac{f}{f_{lp}} - 1 & 2 \end{bmatrix} \begin{bmatrix} I_a^{req} \\ I_b^{req} \\ I_c^{req} \end{bmatrix}$$

where

$I_a^{\#}$, $I_b^{\#}$, $I_c^{\#}$ are the filtered current setpoints;
$s$ is the Laplace operator;
$f$ is the frequency of the electrical network (4); and
$f_{lp}$ is the cut-off frequency of a first-order low-pass filter.

3. Method according to Claim 2, wherein the third step (III) of limiting the degree of variation of said at least one current setpoint comprises the calculation of said at least one current setpoint $\left(I_a^*, I_b^*, I_c^*\right)$ from said at least one filtered current setpoint $\left(I_a^{\#}, I_b^{\#}, I_c^{\#}\right)$ discretized according to the formula:

$$x_{k+1} = \max(\min(x_k + \alpha T_S, x_k), x_k - \alpha T_S)$$

where

$\alpha$ is the maximum degree of variation;
$T_S$ is the sampling interval; and
$\{x_k\}_{k \in \mathbb{N}}$ is a discretized filtered current setpoint.

4. Electric or hybrid vehicle battery charger, configured to implement a method for determining at least one current setpoint $\left(I_a^*, I_b^*, I_c^*\right)$ from at least one measurement of differential voltages between phases ($U_{ab}, U_{bc}, U_{ca}$) measured at input of a rectifier and at least one instantaneous active power setpoint ($P^{req}$) according to any one of Claims 1 to 3, comprising a rectifier (6), an input filter (5) connected to said rectifier (6), and a DC-to-DC voltage converter (7) connected to said rectifier (6) and to at least one battery (2).

5. Battery charger according to Claim 4, wherein the input filter (5) is configured to implement a step (II) of adaptive filtering of said at least one current setpoint.

6. Battery charger according to one of Claims 4 and 5, wherein said rectifier (6) is a rectifier with reactive power compensation, in particular, a Vienna rectifier comprising two capacitors at output.

7. Battery charger according to any one of Claims 4 to 6, wherein the DC-to-DC voltage converter (7) is designed to deliver a voltage of 400 V to said at least one battery (2).

FIG.1

FIG.2

**Documents brevets cités dans la description**

- CN 103187887 B
- US 8971068 B2
- CN 104811061 A
- CN 103227575 A
- KR 101250454 B1
- EP 2461469 A3
- FR 3006521

**Littérature non-brevet citée dans la description**

- **M. ZHANG ; L. HANG ; W. YAO ; Z. LU ; L. M. TOLBERT.** A Novel Strategy for Three-Phase/Switch/Level (Vienna) Rectifier Under Severe Unbalanced Grids. *IEEE Transactions on Industrial Electronics,* Octobre 2013, vol. 60 (10), 4243-4252